# EUROPEAN PATENT APPLICATION

(11) **EP 4 411 618 A1**
(43) Date of publication of application: **07.08.2024**
(21) Application number: 23155012.0
(22) Date of filing: 06.02.2023
(51) Int. Cl.: G06Q 20/40, G06Q 20/32, G06Q 20/34, G06Q 20/38

(54) **OFF-LINE DISTRIBUTED TRANSACTION VALIDATION METHOD**

(71) Applicant: Mastercard International Incorporated, Purchase NY 10577 (US)
(72) Inventor: BERIC, John, London, NW11 8NH (GB); COLNOT, Cédric, 1180 Uccle (BE); GARRETT, Duncan, London, N1 2EJ (GB); WARD, Michael, Taunton, TA4 2JB (GB)
(74) Representative: Murgitroyd & Company

(57) **Abstract**

Cryptographic digital signature certificate chains protect the authenticity of device level public keys used to verify a signature over the transaction data generated from a device private key. It is possible that quantum computers will be able to counterfeit certificate chains enabling massive fraud. In particular, a quantum computer attack on the RSA or ECC public key certificate chain may be financially viable, although this may not be true at a device level. The present disclosure provides a method of trusting a constrained device cryptographic public key in a distributed and off-line manner without traversing a cryptographic public key digital signature certificate chain. The method includes: receiving 210 a request to validate a transaction from a payment device 160; extracting 220 device identification data; interrogating 230 the payment device to determine if data specific to the operator is stored; receiving 240 and validating 250 a local transaction authentication value or rejecting the device; determining 260 whether the payment device is on a deny list, determining 270 to authenticate the payment device 160; and provisionally validating 280 the transaction.

## Description

### Field of the Disclosure

The present disclosure relates generally to an off-line distributed transaction validation method and finds particular, although not exclusive, utility in providing a method of trusting a constrained device identification such as an account identifier or a cryptographic public key in a distributed and off-line manner without traversing a cryptographic public key digital signature certificate chain.

### Background

Cryptographic digital signature certificate chains protect the authenticity of device level public keys, such as chip card based RSA or Elliptic Curve Cryptography (ECC), used to verify a signature over the transaction data generated from a device private key. These certificate chains mean that it is typically possible to rely on the trustworthiness of the device public key without resorting or referring to a distant resource, for example over a network, such as traversing a cryptographic public key digital signature certificate chain. Resorting or referring to a distant resource will typically incur a communications round trip of more than 500 ms. In some circumstances, such a delay is not desirable or acceptable. One such circumstance is at a transit terminal, such as a terminal at a train or bus station. Transit terminals typically see a high volume of consumers passing therethrough in a short time. In many circumstances, it is not possible to increase the number of transit terminals due to a lack of space. Accordingly, to avoid an increase in waiting time or the slow-down of traffic during rush hours, it is typically desirable or necessary to avoid the need for a communications round trip of over 500 ms. Contactless transactions, such as performed using near-field communication (NFC), typically have performance criteria of less than 500 ms and preferably less than 300 ms.

Payment cards and devices may use a certificate chain to authenticate the card when performing local authentication. However, it is possible that quantum computers will be able to counterfeit certificate chains enabling massive fraud. In particular, a quantum computer attack on the RSA or ECC public key certificate chain may be financially viable, although this may not be true at a device level.

Aspects of the present disclosure seek to provide an off-line distributed transaction validation method that alleviates this problem. In particular, aspects of the present disclosure seek to provide a method of trusting a constrained device identification such as an account identifier or a cryptographic public key in a distributed and off-line manner without traversing a cryptographic public key digital signature certificate chain, and therefore avoiding the need for quantum resistant public key algorithm deployment.

### Summary

According to a first aspect of the present disclosure, there is provided an off-line distributed transaction validation method comprising the steps: receiving, at a physical terminal, a request to validate a transaction from a payment device; determining device identification data of the payment device; determining if the payment device stores data specific to an operator; receiving a local transaction authentication value from the payment device; validating the local transaction authentication value; authenticating the payment device; and provisionally validating the transaction.

In this way, there is provided a method for trusting payment credentials on payment devices without relying on RSA, ECC, or indeed any public key certificate chains. In particular, the method provides a timely real time off-line transaction validation of a device, such as a payment card, mobile telephone, smart device or other contactless payment device, without having to traverse either a quantum resistant public key certificate chain which is computationally and monetarily expensive, or a quantum vulnerable public key certificate chain. In particular, since communication is solely between the physical terminal and the payment device, the method of the first aspect may advantageously provide a trustworthy method of trusting a constrained device identification such as an account identifier or a cryptographic public key.

Furthermore, with use of the method of the first aspect, there may be no need to replace existing devices, such as computationally constrained payment cards or smart devices, or infrastructure, such as transit terminals. Additionally, existing payment devices, such as smart phones, and terminals may be used.

Advantageously, some software modification to some terminals may be the only necessary action to implement the method of the first aspect and as such, the method of the first aspect may be more easily implemented. The method of the first aspect may therefore advantageously provide a means for validating a transaction using minimal hardware and software components.

In some embodiments, determining device identification data of the payment device comprises: extracting device identification data from a memory of the payment device. In this way, the device identification data may be actively collected from the memory of the payment device. Advantageously, the device identification data may be more easily determined with respect to payment devices. The device identification data may be an account identifier or a cryptographic public key.

In some embodiments, determining if the payment device stores data specific to the operator comprises: interrogating the payment device to determine if the payment device stores data specific to the operator. In this way, the data specific to the operator may be actively taken from the memory of the payment device. Advantageously, the data specific to the operator may be more easily collected.

In some embodiments, authenticating the payment device comprises, in response to determining that data specific to the operator is not stored in the payment device: calculating an operator authentication value of the device identification data; storing the operator authentication value on the payment device; and considering the payment device as if it has been authenticated. In this way, a payment device not storing data specific to the operator may still be accepted.

In alternative embodiments, authenticating the payment device comprises, in response to determining that data specific to the operator is stored in the payment device: validating the operator authentication value of the device identification data using the data specific to the operator; and considering the payment device as authenticated. In this way, the payment device may be authenticated solely via communication between the physical terminal and the payment device.

In some embodiments, the method further comprises, prior to authentication of the payment device: determining that the device identification data is present on a deny list; and rejecting the payment device. In this way, the payment device may be rejected prior to an attempt to authenticate the payment device. Advantageously, a processing time may be reduced. It will be appreciated that the deny list may be a record of entries of device identification data which have been declared delinquent or otherwise in a state to be denied or refused.

In some embodiments, when it is determined that the payment device stores data specific to the operator, and it is determined the device identification data is present on the deny list, the method further comprises: rejecting the payment device and invalidating the data specific to the operator on the payment device. In this way, the payment device may be rejected prior to an attempt to authenticate the payment device. Advantageously, a processing time may be reduced.

In some embodiments, when the local transaction authentication value is not valid, the method further comprises: rejecting the payment device. In this way, payment devices having an invalid local transaction value may be rejected.

The method may be carried out by a point of sale (POS) terminal, preferably in a closed loop environment wherein inputs and outputs are processed by a single operator network. In some embodiments the POS terminal may be a transit terminal, retail terminal, or a hospitality point of sale system. A transit terminal may be, for example, a gate at a train station or a ticket machine on a bus or tram. Alternatively, the terminal may be a retail terminal at which payment for items may be made. In particular, the retail environment may prevent a consumer from leaving the retail environment until payment for goods carried by or associated with the consumer are provisionally paid for. The method may be particularly applicable to so-called checkout-less retail environments or other retail environments within which a consumer completes a transaction without supervision. The operator may be a transit operator. A transit operator may be any party that is responsible for the operation of a transit system, such as a rail or bus operator. Alternatively, the operator may be a retail operator that is a party responsible for the operation and/or supervision of a retail environment. The payment device may be a near-field communication (NFC) enabled device, such as a smart phone or other smart device. Alternatively, the NFC enabled device may be an NFC enabled card, ring, bracelet or other wearable. The receiving and extracting of data may be carried out via NFC. The method may be initiated by bringing the NFC enabled device within an NFC operational distance of an NFC transceiver of the terminal, which is approximately 10 centimetres or usually less. Alternative communication protocols such as Bluetooth^{®}, an ultra-wide band communication protocol or an infrared communication protocol may be used.

The method may further comprise the step of allowing access via the terminal following the provisional validation of the transaction. In this way, a consumer may be allowed access to a station, bus, tram or other transit network, or leave a retail environment with goods, following the provisional validation. It may not be necessary to wait for complete validation of the transaction before allowing access or allowing the consumer to leave an environment. Complete validation, including both local and remote transaction authentication, typically does not meet the desired or necessary approval time in transit scenarios, and it may be desirable to reduce transaction validation times in other scenarios such as retail. In particular, the remote transaction authentication may take too long for transit scenarios.

The method may further comprise the steps: receiving a remote transaction authentication value from the payment device along with the local transaction authentication value; receiving from a host system of an issuer of payment credentials on the payment device, a determination to validate or refuse the remote transaction authentication value; and validating or refusing the transaction according to the received determination. As noted herein, a complete transaction authentication method includes a local transaction authentication and a remote transaction authentication. The remote transaction authentication value may be or include an application cryptogram. The application cryptogram may be computed using a symmetric quantum resistant algorithm based on a device specific key derived from an issuer master key. The remote transaction authentication value may be provided to the issuer host by the terminal. In this way, the remote transaction authentication value may be eventually validated by the host system of the issuer of the payment credentials on the payment device.

The validating or refusing of the transaction, on the basis of the remote transaction authentication value, may be carried out after access via the transit terminal has been allowed. As such, the consumer may not be delayed at the transit terminal whilst waiting for the transaction to be validated or refused.

The method may further comprise the step of requesting the local authorisation value prior to the step of receiving a local transaction authentication value, in a similar manner to that described herein with reference to the remote authorisation value.

The method may further comprise the step of requesting the remote transaction authentication value prior to the step of receiving the remote transaction authentication value from the payment device. The local and/or remote transaction authentication values may be requested along with the payment credentials, for example upon the payment device being brought into NFC range of the terminal.

When the transaction is refused, the method may further comprise the step of adding the device identification data to the deny list. Accordingly, although the transaction may have been provisionally validated, the final refusal of the transaction means that the device identification data is added to the deny list and a subsequent request will be refused without provisional validation. For example, a consumer using a debit card at a train station terminal for the first time may be allowed access due to provisional validation. However, should that debit account not have sufficient funds, the validation request will be refused and the device identification data related to the debit card will be added to a deny list. In this way, the next time the consumer uses the debit card at a train station terminal, such as at the destination train station terminal or in a subsequent journey, the request may be refused. In this way, a processing time may be reduced. Additionally, validation of the payment device may be controlled by the operator.

The transaction may be provisionally validated within 500 ms of receiving the request to validate the transaction. Preferably, the transaction may be provisionally validated within 300 ms of receiving the request to validate the transaction. In this way, the transaction may be provisionally validated such that, for example, the consumer is allowed access to a transit network via a transit terminal, within a desired or acceptable timeframe. Therefore, the present disclosure provides a secure and off-line validation method that meets the generally desired or acceptable timeframe of transit environments.

When the device identification data is present on the deny list, the method may further comprise the steps: determining a reason for the device identification data being present on the deny list is rectified; and removing the device identification data from the deny list. For example, the device identification data may be present on the deny list due to the payment device having insufficient funds to complete a previous transaction that was provisionally validated. Accordingly, the consumer has a debt owed to the transit operator. The consumer clearing their debt may mean that the reason for the device identification data being present on the deny list is rectified, and the device identification data may be removed from the deny list. Other reasons for the device identification data being present on the deny list are envisaged. Other methods by which said reason may be rectified are also envisaged.

In some embodiments, each local determination of the operator authentication value of the device identification data is performed within a secure environment using at least one symmetric quantum resistant algorithm. The secure environment may be a tamper resistant environment and may be provided by at least one secure access module (SAM). Other devices are known in the art and are equally envisaged, for example a local hardware security module (HSM). Alternatively, the local determination may be implemented entirely in software if the environment is considered secure enough. The at least one symmetric quantum resistant algorithm, possibly similar to the algorithm used for the remote transaction authentication, may include a hash-based message authentication code (HMAC), a cipher-based message authentication code (CMAC) and/or other similar algorithms or functions known in the art.

The physical terminal may be one of a plurality of physical terminals in a network of physical terminals. The network of physical terminals may be cross-operator and/or cross-network. For example, the network of physical terminals may include only those terminals operated by one transit operator of several transit operators. Alternatively, the network of physical terminals may include terminals operated by each of the several transit operators, such that a common deny list is shared across the several transit operators. Alternatively, the network of physical terminals may include terminals operated by each of the several transit operators, along with several second transit operators, for example several rail operators and several bus operators. In this way, a common deny list may be shared across a plurality of transit networks. A common deny list may be shared by transit operators in a city, region, state, country, continent, or worldwide. In this way, a consumer may gain access via a terminal with a particular device without full payment only once. Each of the plurality of physical terminals may locally store the deny list. In this way, the terminal need not refer to the deny list over a network, which would typically increase the time required for provisional approval. The deny list may be periodically updated.

According to a second aspect of the present disclosure, there is provided a data processing system associated with a physical terminal, the system comprising a processor configured to perform the method of the first aspect.

According to a third aspect of the present disclosure, there is provided a computer program product comprising instructions which, when the program is executed by a computer associated with a physical terminal, cause the computer to carry out the method of the first aspect.

According to a fourth aspect of the present disclosure, there is provided a computer-readable storage medium associated with a physical terminal, the medium comprising instructions which, when executed by a computer, cause the computer to carry out the method of the first aspect. The medium may be non-transitory.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### Brief Description of the Drawings

The disclosure will be further described with reference to examples depicted in the accompanying figures in which:
Figure 1 is a schematic diagram of a transit terminal system;
Figure 2 is a method diagram showing the steps of an off-line distributed transaction validation method; and
Figure 3 is a method diagram showing the steps of a remote transaction authentication validation method.

### Detailed Description

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

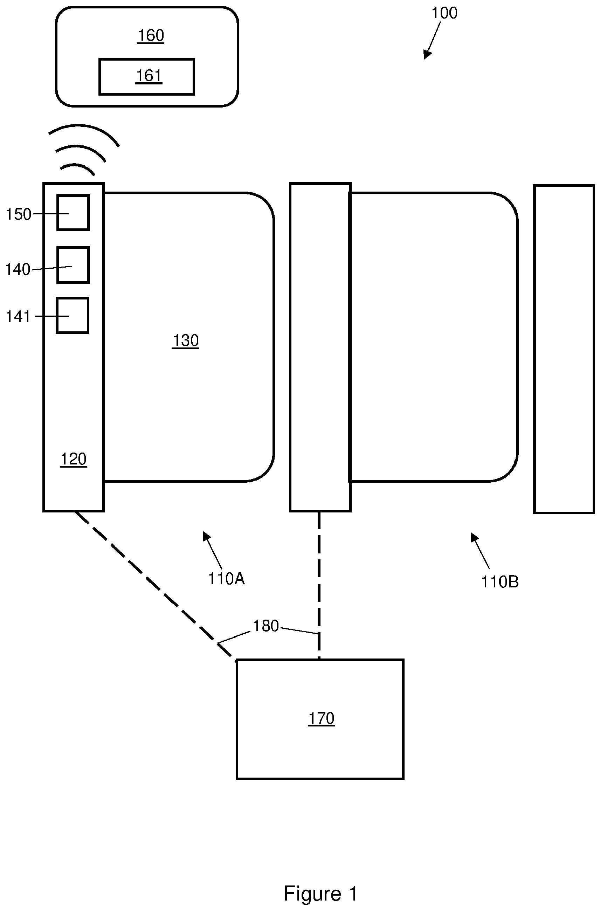

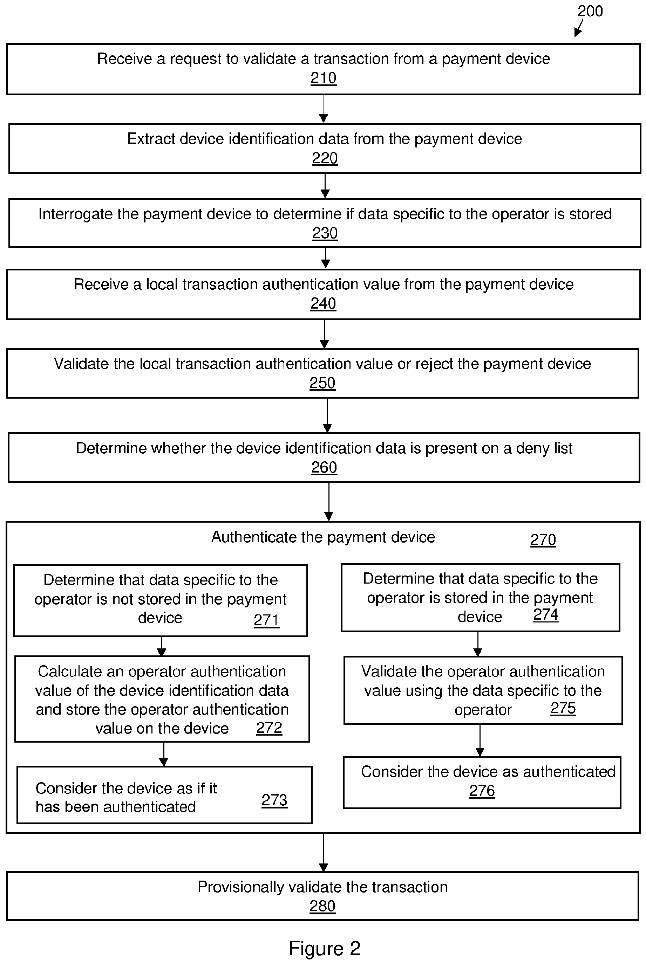

Figure 1 is a schematic diagram of a transit terminal system 100. The transit terminal system 100 may be suitable for carrying out the method shown in Figure 2. The system 100 may be, for example, a network of gates or barriers at a train station. Other transit specific systems, such as those present on bus or tram networks, are also envisaged.

The system 100 comprises a physical terminal. In the present example, the system 100 includes two transit terminals, first terminal 110A and second terminal 110B. The first terminal 110A and second terminal 110B are functionally identical and may be two of tens, hundreds or thousands of such like terminals. For purposes of brevity, only the functioning of the first terminal 110A will be described herein, but the description of the first terminal 110A is considered to apply equally to the second terminal 110B and any other terminal (not shown) in the system 100.

It will be appreciated that the physical terminal may be any physical terminal, and is not limited to the context of transit terminal systems. The physical terminal may be an area, a bay, a device, or any other physical structure with which a consumer may momentarily engage before proceeding onwards. The physical terminal may include a display, input means, a memory, a moveable barrier, and/or any other desired or necessary physical components. The physical terminal may prevent or restrict a consumer from passing therethrough unless one or more conditions are met, such as the consumer being in possession of a valid ticket or providing payment credentials. The physical terminal may be operated by an operator, such as a train operating company. That is, the operator may be a party responsible for the running of the physical terminal, and thus may be responsible for carrying out actions in relation to the physical terminal.

The first terminal 110A includes a fixed barrier portion 120 and a moveable barrier portion 130. The fixed barrier portion 120 may be a post or any other suitable fixed structure. The moveable barrier portion 130 is configured to be moveable relative to the fixed barrier portion 120 between a blocking position, as shown in Figure 1, and an access position (not shown). With the moveable barrier portion 130 in the blocking position, the first terminal 110A is arranged to prevent a consumer from passing therethrough. With the moveable barrier portion 130 in the access position, the first terminal 110A is arranged to allow a consumer to pass therethrough.

The first terminal 110A includes a processor 140 and associated memory 141. The processor 140 and memory 141 are shown in the fixed barrier portion 120, but the processor 140 and memory 141 may be alternatively positioned or arranged. The processor 140 is configured to control operation of the first terminal 110A, such as opening of the first terminal 110A by controlling a motor (not shown) to move the moveable barrier portion 130 from the blocking position and the access position.

The processor 140 also controls operation of an NFC transceiver 150, also shown to be arranged within the fixed barrier portion 120. The NFC transceiver 150 may be arranged to continuously or continually search for an NFC enabled device 160, such as a payment device 160. When a consumer brings an NFC enabled device 160 within range of the NFC transceiver 150, the processor 160 may interrogate a memory 161 of the payment device 160.

The payment device 160 may be a consumer device, such that the payment device 160 is the property of a consumer or under the possession of a consumer. The memory 161 of the payment device 160 may store the device identification data. The first terminal 110A may be able to read and write to the memory 161 of the payment device 160. As such, the first terminal 110A may be able to read device identification data and write or delete identification data. The device identification data may be related to or include any data unique to or associated with the payment device 160. For example, the device identification data may be or include an account identifier, a cryptographic public key, a serial number and/or any other data.

As described with reference to Figure 2, the processor 140 may carry out the steps of the off-line distributed transaction validation method 200. The memory 141 associated with the processor 140 locally stores a deny list such that an off-line transaction validation is possible. The terminal 110A has the ability to interrogate the deny list. A master deny list may be stored centrally and away from the terminal 110A. A copy of the deny list may be stored locally on a memory associated with the terminal. The interrogation of the copy of the deny list stored locally may take less time than interrogation of the master deny list. The copy of the deny list stored locally may be periodically updated to match the master deny list. The deny list may be periodically updated. Periodically updated may mean updated every 1 minute, 2 minutes, 5 minutes, 15 minutes, 30 minutes, 1 hour, or any other desired time interval. In this way, the first terminal 110A may have access to a relatively up to date deny list, without having to consult the master deny list over a network which may cause undesirable delays. Alternatively or additionally, an updated deny list may be pushed to the first terminal 110A after a predetermined number of changes have been made to the deny list and/or upon initiation by an operator employee. Alternatively, the deny list may be stored on a common access server, such as a network server, provided the access to the deny list is compatible with desired or necessary transaction times.

The local determination may be performed within a secure environment using at least one symmetric quantum resistant algorithm. The secure environment may be a tamper resistant environment that may be provided by at least one secure access module (SAM). Other devices are known in the art and are equally envisaged, for example a local hardware security module (HSM). Alternatively, the local determination may be implemented entirely in software if the environment is considered secure enough. The at least one symmetric quantum resistant algorithm, possibly similar to the algorithm used for the remote transaction authentication, may include a hash-based message authentication code (HMAC), a cipher-based message authentication code (CMAC) and/or other similar algorithms or functions known in the art.

Should the transaction be provisionally validated, the moveable barrier portion 130 may be moved to the access position such that the consumer is allowed access to the station via the first terminal 110A. As the deny list is stored locally, and the processing is also carried out locally, there is no need to consult an online server or other online component, meaning the time between the NFC transceiver 150 identifying the payment device 160 and the moveable barrier portion 130 being moved to the access position may be less than 500 ms, particularly less than 300 ms. Therefore, acceptable time frames may be achieved with a relatively secure validation method in an off-line manner.

The processor 140 of the first terminal 110A, and the processor of each other terminal in the system 100, is in communication with a central server 170 via a network 180. The central server 170 is configured to maintain the deny list in a master form. In particular, the central server 170 is configured to receive device identification data corresponding to delinquent devices following the inability to complete a transaction, and add such device identification data to the deny list. Furthermore, should the reason for identification data being present on the deny list be rectified, for example by clearing a debt, the server 170 is configured to remove such device identification data from the deny list.

The copy of the deny list stored locally on the memory 141 may be periodically updated to match the master deny list. The deny list stored on the memory 141 may be periodically updated, for example every 1 minute, 2 minutes, 5 minutes, 15 minutes, 30 minutes, 1 hour, or any other desired time interval. As such, the terminal 120 has access to a relatively up to date deny list, without having to consult the master deny list on the server 170 which may cause undesirable delays. In an alternative arrangement, the deny list may be stored on the server 170 only and consulted via the network 180, provided the access to the deny list is compatible with desired or necessary transaction times.

Figure 2 is a method diagram showing the steps of an off-line distributed transaction validation method 200.

The first step is to receive 210 a request to validate a transaction from a payment device. The method 200 may be initiated, and the first step initiated and completed, for example by bringing an NFC enabled device within an NFC operational distance of an NFC transceiver of a transit terminal, which is approximately 10 centimetres or usually less. The payment device may be operated by a consumer and put into a state ready to initiate a transaction, for example by accessing a wallet application or similar. Alternatively, the payment device may be in a constant state of readiness, such as an NFC enabled chip card. Some embodiments may comply with defined payment standards for example, but not limited to those provided by EMVCo and/or the International Standards Organisation (ISO). Typically, in EMV compliant contactless transactions the terminal polls for the presentation of the payment device and when it's detected, the transaction is initiated.

The next step is to determine device identification data of the payment device. Determining the device identification data may comprise extracting 220 the device identification data from a memory of the payment device. Extracting 220 the device identification data from the memory of the payment device may comprise performing a payment transaction on the basis of the payment credentials stored on the payment device. As such, the terminal may be provided with the device identification data, which may be related to or include any data unique to or associated with the payment device. For example, the device identification data may be or include an account identifier, a cryptographic public key, a serial number and/or any other data.

A further step is to determine if the payment device stores data specific to the operator. Determining if the payment device stores data specific to the operator may comprise interrogating 230 the payment device to determine if the payment device stores data specific to the operator. The terminal may read the memory of the payment device and look for data specific to the operator. In this way, interrogating the memory of the payment device to determine if the memory of the payment device stores data specific to the operator may mean interrogating the memory to look for a predetermined bit string that identifies a packet of data as being data specific to the operator.

Typically, payment cards and other contactless payment devices provide a data storage facility which is potentially used by operators. The operator data is typically accessed by specifying the operator identifier or a storage location identifier when reading or writing the data. As such, interrogating 230 the memory of the payment device to determine if the memory of the payment device stores data specific to the operator may mean interrogating 230 the memory to look for a predetermined bit string that identifies a packet of data as being data specific to the operator, by specifying an operator identifier when interrogating 230 the memory, and/or by specifying a storage location when interrogating 230 the memory.

The next step is to receive 240 a local transaction authentication value from the payment device. The local transaction authentication value may be received 240 following a request to the payment device to provide the local transaction authentication value. The local transaction authentication value may be or include a local cryptogram such as a device signature over the transaction data.

The method 200 then includes the step of validating 250 the local transaction authentication value. The local transaction authentication value may be validated locally by using the terminal. For example, the validation of the local cryptogram may comprise verifying the device signature over the transaction data. As such, the provisional validation may be based upon the local validation of the local transaction authentication value by the terminal, avoiding the need to traverse a network, which may not be compatible with the desired provisional validation time. The payment device may be rejected if the local transaction authentication value is not validated.

The next step is to determine 260 whether the device identification data is present on a deny list. If the device identification data is present on the deny list, the payment device is rejected and the data specific to the operator in the memory is invalidated. The method 200 does not proceed from step 260 if the device identification data is determined to be present on the deny list. If the device identification data is not present on the deny list, the method proceeds to step 270.

Rejecting the payment device may mean that the transaction is not provisionally validated. The consumer may then be directed to seek assistance. For example, the terminal may include a display, loudspeaker or other output device that alerts the consumer to seek assistance. The reason for the device identification data being on the deny list and the validation request being refused may then be rectified with assistance, without the consumer being allowed access.

Invalidating the data specific to the operator in the memory may mean that the terminal writes to the memory of the payment device and marks invalid or deletes the data specific to the operator from the memory. Provisionally validating the transaction may mean that, although the transaction has not been completed as the remote transaction authentication has not been carried out, the consumer is allowed to progress beyond the physical terminal.

The next step is to authenticate 270 the payment device. There are two sub-methods by which the authentication 270 is made. The relevant sub-method is used based on the presence or absence of data specific to the operator being present, as determined by interrogating 230 the payment device.

If it is determined 271 that data specific to the operator is not stored in the payment device, the next step in authenticating the payment device is to calculate 272 an operator authentication value of the device identification data and store the operator authentication value on the payment device. Calculating an operator authentication value of the device identification data may comprise using a symmetric quantum resistant algorithm based on a device specific key derived from an operator master key to calculate a MAC over the device identification data. The final step of the sub-method is to consider 273 the payment device as if it has been authenticated because the operator authentication value is new or fresh and therefore undoubtedly valid.

If it is determined 274 that data specific to the operator is stored in the payment device, the next step in authenticating the payment device is to validate 275 the operator authentication value using the data specific to the operator, and consider 276 the payment device as authenticated.

The final step is to provisionally validate 280 the transaction. The consumer may then be allowed access beyond the terminal and into the transit network. For example, if the terminal is a barrier at a train station, the consumer may be allowed access to the train station following the provisional validation 280 of the transaction, but prior to the full validation of the transaction. Full validation of the transaction may not meet the desired maximum time for a consumer to wait at a terminal.

Typically, a complete transaction authentication method includes a local transaction authentication and a remote transaction authentication. The local transaction authentication value may be or include a local cryptogram such as a device signature over the transaction data. The local transaction authentication value may be validated locally by a terminal, such as the first terminal 110A, following the off-line distributed transaction validation method 200. As such, the provisional validation may be based upon the local validation of the local transaction authentication value by the terminal, avoiding the need to traverse a network, which may not be compatible with the desired provisional validation time.

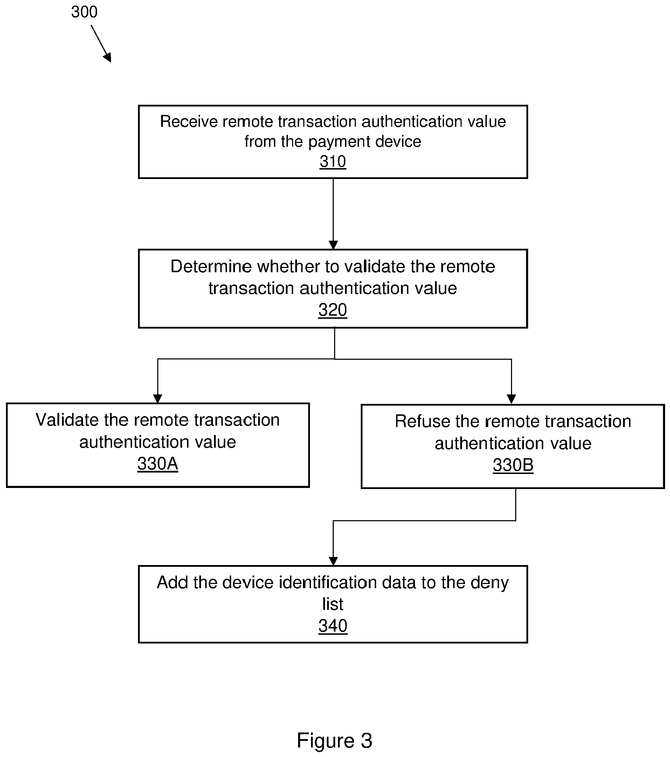

Figure 3 is a method diagram showing the steps of a remote transaction authentication validation method 300. The remote transaction authentication validation method 300 may, for example, follow the off-line distributed transaction validation method 200 shown in Figure 2. In particular, the remote transaction authentication validation method 300 may be carried out at least partially following provisionally validating 270 the transaction as in Figure 2.

The first step of the remote transaction authentication validation method 300 is to receive 310, at the terminal, a remote transaction authentication value from the payment device. The remote transaction authentication value may be received 310 simultaneously with, and in the same manner as, the local transaction authentication value as described with reference to Figure 2. The remote transaction authentication value may be forwarded by the terminal to a host system of an issuer of the payment credentials on the payment device.

The next step is to determine 320 whether to validate the remote transaction authentication value. The determination 320 may be carried out by the host system of the issuer according to methods and techniques known in the art. The host system of the issuer may provide the determination 320 to the first party. The outcome of the determination 320 whether to validate the remote transaction authentication value is to either validate 330A the remote transaction authentication value, and authorising and/or completing the transaction, or to refuse 330B the remote transaction authentication value, thereby rejecting and/or denying the transaction. Should the remote transaction authentication value be refused 330B for any reason, a subsequent step is to add 340 the device identification data to the deny list.

Accordingly, no provisional validation 280 may be granted in future to a delinquent device whose device identification data appears on the deny list.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business-related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An off-line distributed transaction validation method comprising the steps:
receiving, at a physical terminal, a request to validate a transaction from a payment device;
determining device identification data of the payment device;
determining if the payment device stores data specific to an operator;
receiving a local transaction authentication value from the payment device;
validating the local transaction authentication value;
authenticating the payment device; and
provisionally validating the transaction.

2. The method of claim 1, wherein determining device identification data of the payment device comprises:
extracting device identification data from a memory of the payment device; and/or preferably
wherein determining if the payment device stores data specific to the operator comprises: interrogating the payment device to determine if the payment device stores data specific to the operator.

3. The method of claim 1 or claim 2, wherein authenticating the payment device comprises, in response to determining that data specific to the operator is not stored in the payment device:
calculating an operator authentication value of the device identification data;
storing the operator authentication value on the payment device; and
considering the payment device as if it has been authenticated; or
wherein authenticating the payment device comprises, in response to determining that data specific to the operator is stored in the payment device:
validating the operator authentication value of the device identification data using the data specific to the operator; and
considering the payment device as authenticated.

4. The method of any preceding claim, further comprising, prior to authentication of the payment device:
determining that the device identification data is present on a deny list; and
rejecting the payment device.

5. The method of claim 4, wherein, when it is determined that the payment device stores data specific to the operator, and it is determined the device identification data is present on the deny list, the method further comprises:
rejecting the payment device and invalidating the data specific to the operator on the payment device.

6. The method of any preceding claim, wherein, when the local transaction authentication value is not valid, the method further comprises:
rejecting the payment device.

7. The method of any preceding claim, wherein the method is carried out by a transit terminal, the operator is a transit operator, the payment device is an NFC enabled device, the receiving and extracting of data is carried out via NFC, and the method is initiated by bringing the NFC enabled device within an NFC operational distance of an NFC transceiver of the terminal, wherein the method further comprises the step of allowing access via the terminal following the provisional validation of the transaction; and/or preferably wherein the device identification data is an account identifier or a cryptographic public key.

8. The method of any preceding claim, further comprising the steps:
receiving a remote transaction authentication value from the payment device along with the local transaction authentication value;
receiving, from a host system of an issuer of payment credentials on the payment device, a determination to validate or refuse the remote transaction authentication value; and
validating or refusing the transaction according to the received determination.

9. The method of claim 8, when dependent on claim 7, wherein the validating or refusing of the transaction is carried out after access via the transit terminal has been allowed; and/or preferably further comprising the step of requesting the remote transaction authentication value prior to the step of receiving the remote transaction authentication value from the payment device; and/or preferably wherein, when the transaction is refused, the method further comprises the step of adding the device identification data to the deny list.

10. The method of any of any of claims 4 to 9 when dependent on claim 4, wherein, when the device identification data is present on the deny list, the method further comprising the steps:
determining a reason for the device identification data being present on the deny list is rectified; and
removing the device identification data from the deny list.

11. The method of any preceding claim, wherein each local determination of the operator authentication value of the device identification data is performed within a secure environment using at least one symmetric quantum resistant algorithm.

12. The method of any preceding claim, wherein the physical terminal is one of a plurality of physical terminals in a network of physical terminals, each of the plurality of physical terminals locally store the deny list, and the deny list is periodically updated.

13. A data processing system associated with a physical terminal, the system comprising a processor configured to perform the method of any preceding claim.

14. A computer program product comprising instructions which, when the program is executed by a computer associated with a physical terminal, cause the computer to carry out the method of any of claims 1 to 12.

15. A computer-readable storage medium associated with a physical terminal, the medium comprising instructions which, when executed by a computer, cause the computer to carry out the method of any of claims 1 to 12.
